# EUROPEAN PATENT SPECIFICATION

(11) **EP 3 784 725 B1**
(45) Date of publication and mention of the grant of the patent: **06.05.2026**
(21) Application number: 19729915.9
(22) Date of filing: 25.04.2019
(51) Int. Cl.: C08K 3/04, C08K 5/00, C08K 5/14, C08K 5/3492, C08K 5/375, C08K 5/5425, C08L 23/10, C08L 23/0807, C08L 23/12

(54) **POLYOLEFIN ADDITIVE FORMULATIONS**
POLYOLEFINZUSATZFORMULIERUNGEN
FORMULATIONS D'ADDITIFS POLYOLÉFINIQUES

(30) Priority: 26.04.2018 US 201862662791 P
(43) Date of publication of application: 03.03.2021
(73) Proprietor: Dow Global Technologies LLC, Midland, MI 48674 (US)
(72) Inventor: HAN, Suh Joon, Collegeville, PA 19426 (US); KJELLQVIST, Jerker B.L., 8810 Horgen (CH)
(74) Representative: Boult Wade Tennant LLP
(86) International application number: PCT/US2019/029075
(87) International publication number: WO 2019/210040

(56) References cited:
- WO-A2-02/31043
- WO-A2-2008/046751
- CN-A- 105 015 041
- JP-A- 2000 306 433
- DATABASE CA [online] CHEMICAL ABSTRACTS SERVICE, COLUMBUS, OHIO, US; 4 November 2015 (2015-11-04), LI, ZHUOMIN: "One kind of HDPE pipe for deep-sea aquaculture net cage and preparation method thereof", XP002793871, retrieved from STN Database accession no. 2015:1753382
- DATABASE CA [online] CHEMICAL ABSTRACTS SERVICE, COLUMBUS, OHIO, US; 2 November 2000 (2000-11-02), SEKIGUCHI, YOICHI ET AL: "Electrically insulating polyolefin compositions and durable electric wires, cables, and connectors therefrom", XP002793872, retrieved from STN Database accession no. 2000:769621

## Description

### FIELD

Polyolefin-additive formulations, products, articles and related methods.

### INTRODUCTION

Patents in the field include CN 103509239 B, US 5,380,591; US 5,766,761; US 6,468,583 B1; and US 6,656,986 B2.

Insulated electrical conductors typically comprise a conductive core covered by an insulation layer. The conductive core may be solid or stranded (e.g., a bundle of wires). Some insulated electrical conductors may also contain one or more additional elements such as semiconducting layer(s) and/or a protective jacket (e.g., wound wire, tape, or sheath). Examples are coated metal wires and electrical power cables, including those for use in low voltage ("LV", > 0 to < 5 kilovolts (kV)), medium voltage ("MV", 5 to < 69 kV), high voltage ("HV", 69 to 230 kV) and extra-high voltage ("EHV", > 230 kV) electricity-transmitting/distributing applications. Evaluations of power cables may use AEIC/ICEA standards and/or IEC test methods. In the field during operational use, the power cables are exposed to harmful effects of ultraviolet light (e.g., from the sun) and heat up to 90° C. or more (e.g., generated within the cable).

### SUMMARY

We have discovered a need for new materials for use as insulation layers in power cables. The material would exhibit enhanced stability when subjected to a combination of heat and ultraviolet (UV) light and have satisfactory dielectric properties.

Our technical solution to this problem inhibits degradations caused by heat and degradations caused by UV light while maintaining satisfactory dielectric properties. The solution includes a curable polyolefin-additive formulation comprising a polyolefin polymer, a carbon black, a hindered amine light stabilizer that is a triazinyl-functional hindered piperidine, and an antioxidant that is a sulfur-containing hindered bisphenol.

Also included is a crosslinked polyolefin-additive product made by curing the curable polyolefin-additive formulation.

Also included are methods of making and using same, and articles containing or made from same.

### DETAILED DESCRIPTION

Examples of embodiments include the following numbered aspects.

Aspect 1. A curable polyolefin-additive formulation comprising constituents (A) to (D): from 70 to 99.7 weight percent (wt%) of (A) a polyolefin polymer having a melt index ("I₂") of from 0.1 to 50 grams per 10 minutes (g/10 min.), measured by ASTM D1238-04 at 190° C. and load of 2.16 kilograms according to the Melt Index Test Method (described later); from 0.1 to 5 wt% of (B) a carbon black; from 0.2 to 5 wt%, alternatively 0.25 to 3.4 wt% of (C) a triazinyl-functional hindered piperidine; and from 0.1 to 1.00 wt%, alternatively from 0.1 to 0.90 wt%, alternatively from 0.2 to 0.90 wt% of (D) a sulfur-containing hindered bisphenol (SCHBP) of formula (I): HO(R¹)ₓPh-S-Ph(R²)_{y}OH (I), wherein subscript x is an integer from 1 to 3; HO(R¹)ₓPh is a first monovalent hindered phenol group wherein each R¹ is independently a (C₁-C₇)alkyl and at least one R¹ is independently a (C₃-C₆)alkyl and is ortho to the hydroxyl (HO-) of the first monovalent hindered phenol group; subscript y is an integer from 1 to 3; Ph(R²)_{y}OH is a second monovalent hindered phenol group wherein each R² is independently a (C₁-C₇)alkyl and at least one R² is independently a (C₃-C₆)alkyl and is ortho to the hydroxyl (-OH) of the second monovalent hindered phenol group; and wherein the (B) carbon black is characterized by (i) a particle size from 15 to 30 nanometers (nm) measured according to ASTM D3849-14a; and (ii) an oil absorption number (OAN) from 50 to 250 milliliters per 100 grams (ml/100 g) measured according to ASTM D2414-17, Procedure A with dibutyl phthalate (DBP). All wt% of constituents of the curable polyolefin-additive formulation are based on total weight of the curable polyolefin-additive formulation. The "polyolefin additive formulation" and "polyolefin-additive formulation" mean the same thing, which is a material or mixture prepared according to a list of ingredients and their amounts. For example, in aspect 1 the list of ingredients comprises the (A) polyolefin polymer and additives (B) to (D) and their amounts are their respective wt%. The polyolefin additive formulation may be curable (e.g., aspects 1 to 6) or crosslinked (e.g., aspect 8). The "curable" means capable of forming or being crosslinked. The "crosslinked" may be a partially networked material, which has some crosslinks between macromolecules and some macromolecules capable of further crosslinking; or a completely networked material, wherein no further crosslinks between macromolecules may be formed (steady state thermoset).

Aspect 2. The curable polyolefin-additive formulation of aspect 1 wherein the (A) polyolefin polymer is characterized by any one of limitations (i) to (xv): (i) an ethylene-based polymer; (ii) an ethylene-based polymer that is a low density polyethylene (LDPE); (iii) an ethylene-based polymer that is a linear low density polyethylene (LLDPE); (iv) an ethylene-based polymer that is a medium density polyethylene (MDPE); (v) an ethylene-based polymer that is a high density polyethylene (HDPE); (vi) an ethylene-based polymer that is a poly(ethylene-*co*-alpha-olefin) copolymer; (vii) is a polypropylene; (viii) an ethylene-based polymer that is an ethylene/propylene copolymer; (ix) a density of at least 0.925 g/cm³ and is a polyethylene and has a melt flow index (I₂) of 0.1 to 20 g/10 min. at 190° C./2.16 kg load; (x) a density of 0.89 to 0.96 g/cm³ and is a polypropylene and has a melt flow rate (MFR) of 0.5 to 50 g/10 min. at 230° C./2.16 kg load; (xi) a molecular weight distribution (MWD) that is monomodal; (xii) a MWD that is bimodal; (xiii) a combination of (ii) and (ix); (xiv) a combination of (ii), (ix) and (xi); and (xv) a combination of (ii), (ix) and (xii). Alternatively, the (A) may be characterized by limitation (xvi) wherein the (A) polyolefin polymer is characterized by any one limitation chosen from any 14 of limitations (i) to (xv).

The (B) carbon black is characterized by (i) a particle size from 15 to 30 nm, alternatively 16 to 24 nm measured according to ASTM D3849-14a; and (ii) an oil absorption number (OAN) from 50 to 250 milliliters per 100 grams (ml/100 g) measured according to ASTM D2414-17, Procedure A with dibutyl phthalate (DBP).

Aspect 3. The curable polyolefin-additive formulation of any one of aspects 1 or 2 wherein the (C) triazinyl-functional hindered piperidine is selected from (i) a mixture of 1,3,5-Triazine-2,4,6-triamine, N,N'-[1,2-ethanediylbis[[[4,6-bis[butyl(1,2,2,6,6-pentamethyl-4-piperidinyl)amino]-1,3,5-triazin-2-yl]imino]-3,1propanediyl]]-bis[N,N'-dibutyl-N,N'-bis (1,2,2,6,6-pentamethyl-4-piperidinyl)-, and dimethyl succinate polymer with 4-hydroxy-2,2,6,6,-tetramethyl-1-piperidineethanol (e.g., Tinuvin 111); (ii) (poly[[6-(1,1,3,3-tetramethylbutyl) amino]-1,3,5-triazine-2,4-diyl][[2,2,6,6-tetramethyl-4-piperidyl)imino]]hexamethylene (2,2,6,6-tetramethyl-4-piperidyl)imino]]) (Chimassorb 944); (iii) (1,3,5-Triazine-2,4,6-triamine-N,N'-[1,2-ethanediylbis[[[4. 6-bis[butyl(1,2,2,6,6-pentamethyl-4-peperidinyl)amino]-1,3,5-triazin-2-yl] imino]-3,1-propanediyl]]-bis[N,N'-dibutyl-N,N'-bis (1,2,2,6,6-pentamethyl-4-piperidinyl) (Chimassorb 119); and (iv) a reaction product of 1,6-hexanediamine, N,N'-bis(2,2,6,6-tetramethyl-4-piperidinyl)-polymer with 2,4,6-trichloro-1,3,5-triazine with N-butyl-1-butanamine and N-butyl-2,2,6,6-tetramethyl-4-piperidinamine (Chimassorb 2020, CAS 192268-64-7). Alternatively, the (C) may be selected from (v) a combination of any two of (i) to (iv); and (vi) a combination of any one limitation chosen from any three of limitations (i) to (iv).

Aspect 4. The curable polyolefin-additive formulation of any one of aspects 1 to 3 wherein the (D) SCHBP is characterized by any one of limitations (i) to (ix): (i) subscript x is 2 or 3; (ii) at least one R¹ is a 1,1-dimethylethyl and is ortho to the hydroxyl of the first monovalent hindered phenol group; (iii) subscript y is 2 or 3; (iv) at least one R² is a 1,1-dimethylethyl and is ortho to the hydroxyl of the second monovalent hindered phenol group; (v) at least one R¹ is a 1,1-dimethylethyl and is ortho to the hydroxyl of the first monovalent hindered phenol group and at least one R¹ is a methyl; (vi) at least one R² is a 1,1-dimethylethyl and is ortho to the hydroxyl of the second monovalent hindered phenol group and at least one R² is a methyl; (vii) subscript x is 2, one R¹ is a 1,1-dimethylethyl and is ortho to the hydroxyl of the first monovalent hindered phenol group and one R¹ is a methyl; (viii) subscript y is 2, one R² is a 1,1-dimethylethyl and is ortho to the hydroxyl of the second monovalent hindered phenol group and one R² is a methyl; and (ix) the SCHBP is 4,4'-thiobis(2-(1,1-dimethylethyl)-5-methylphenol).

Aspect 5. The curable polyolefin-additive formulation of any one of aspects 1 to 4 further comprising at least one additive selected from 0.1 to 5 wt% of (E) an organic peroxide; (F) an antioxidant having a structure different than formula (I); (G) a processing aid; (H) a colorant; (I) a metal deactivator; (J) an olefin-functional hydrolyzable silane; (K) a corrosion inhibitor; (L) a flame retardant; and (M) a filler. Aspect 6: In some aspects the curable polyolefin-additive formulation of any one of aspects 1 to 4 further comprises from 0.1 to 5 wt% of the (E) organic peroxide and/or the (J) olefin-functional hydrolyzable silane.

Aspect 7. A method of making a curable polyolefin-additive formulation, the method comprising mixing the constituents (A) to (D) of any one of aspects 1 to 4, and optionally any one or more of constituents (E) to (M) of aspect 5 or 6 so as to give a mixture; and melting or extruding the mixture so as to make the curable polyolefin-additive formulation. In some aspects the method further comprises mixing the constituents (A) to (E) and optionally (J).

Aspect 8. A crosslinked polyolefin-additive product comprising a reaction product of curing the curable polyethylene-additive formulation of any one of aspects 1 to 6. All wt% of constituents of the crosslinked polyolefin-additive product are based on total weight of the crosslinked polyolefin-additive product.

Aspect 9. A manufactured article comprising a shaped form of the crosslinked polyolefin-additive product of aspect 8.

Aspect 10. A coated conductor comprising a conductive core and a polymeric layer at least partially surrounding the conductive core, wherein at least a portion of the polymeric layer comprises the curable polyethylene-additive formulation of any one of aspects 1 to 6 or the crosslinked polyolefin-additive product of aspect 8.

A method of conducting electricity can be provided, the method comprising applying a voltage across the conductive core of the coated conductor of aspect 10 so as to generate a flow of electricity through the conductive core.

In some aspects the polyolefin-additive formulation is characterized by any one of limitations (i) to (xii): (i) a tensile strength after heat aging at 150° C. for 168 hours of 9.0 to 50 megapascals (MPa); (ii) an elongation-at-break after heat aging at 150° C. for 168 hours of 300 percent (%) or greater, alternatively greater than 400%; (iii) a tensile strength after QUV aging for 1,000 hours of 18 MPa or greater; (iv) after QUV aging for 1,000 hours an elongation-at-break of 300% to 1,000%, alternatively 500% to 1,000%; (v) a moving die rheometer (MDR) highest measured torque (MH) at 182° C. after 20 minutes of 0.20 to 5 Newton-meter (N-M), alternatively 0.30 to 5 N-M; (vi) a dielectric constant at 23° C. and 1 megahertz (MHz) of 2.40 or less; (vii) a dissipation factor of 0.0010 or less, alternatively 0.0009 or less, alternatively 0.00010 to 0.00050; (viii) a combination of (iii) or (iv) and (vi) or (vii); (ix) a combination of (iii), (iv), (vi), and (vii); (x) a combination of (ii) or (iii) and at least one of (vi) and (vii); (xi) a combination of any six of (i) to (vii); and (xii) a combination of each of (i) to (vii).

Carbon black aggregate: a discrete, rigid colloidal entity that is the smallest dispersible unit of carbon black. The carbon black aggregate is composed of extensively coalesced particles.

Carbon black aggregate size: a distributional property that is a mean value calculated from multiple measurements according to ASTM D3849-14a.

Carbon black particle: a small spheroidal, paracrystalline, non-discrete component of a carbon black aggregate. The carbon black particle can be separated from the carbon black aggregate by fracturing.

Carbon black particle size: a distributional property that is a mean value calculated from multiple measurements according to ASTM D3849-14a.

"Crosslinked polyolefin-additive product" means a material comprising a crosslinked polyolefin constituent and at least one additive constituent other than a peroxide. The at least one additive constituent other than a peroxide includes the (B) carbon black, (C) triazinyl-functional hindered piperidine, and (D) sulfur-containing hindered bisphenol (SCHBP), and optionally any one or more of optional additives such as constituents (F) to (M), etc. The crosslinked polyolefin-additive product may be peroxide cured or irradiation cured. The peroxide-cured crosslinked polyolefin-additive product may be free of (E) organic peroxide.

"Curable polyolefin-additive formulation" means a material comprising a curable polyolefin constituent and at least one additive constituent. The curable polyolefin constituent, also referred to as a crosslinkable polyolefin constituent, may be cured by irradiation-induced or peroxide/heat-induced crosslinking, and thus the curable polyolefin-additive formulation may be free of (E) organic peroxide, alternatively may further comprise (E). The at least one additive constituent includes the (B) carbon black, (C) triazinyl-functional hindered piperidine, and (D) sulfur-containing hindered bisphenol (SCHBP), and optionally any one or more of optional additives such as constituents (E) to (M), etc.

"Curing" and "crosslinking" are used interchangeably herein to mean forming a crosslinked product (network polymer).

"(Meth)acrylate" includes acrylate, methacrylate, and a combination thereof. The (meth)acrylate may be unsubstituted.

"Polymer" means homopolymer or copolymer. A homopolymer is a macromolecule composed of monomeric units derived from only one monomer and no comonomer. A copolymer is a macromolecule having monomeric units and comonomeric units, wherein the monomeric units are made by polymerizing a first monomer, and the comonomeric units are made by polymerizing one or more different second or more monomers, referred to as comonomers. Polymer also includes a collection of such macromolecules. Monomers and comonomers are polymerizable molecules. A monomeric unit, also called a monomer unit or "mer", is the largest constitutional unit contributed by (derived from) a single monomer molecule to the structure of the macromolecule(s). A comonomeric unit, also called a comonomer unit or "comer", is the largest constitutional unit contributed by (derived from) a single comonomer molecule to the structure of the macromolecule(s). Each unit is typically divalent. A "bipolymer" is a copolymer made from a monomer and one comonomer. A "terpolymer" is a copolymer made from a monomer and two different comonomers. An ethylenic-based copolymer is such a copolymer wherein the monomeric units are derived from the monomer ethylene (CH₂=CH₂) and comprise on average per molecule, at least 50 weight percent, and the comonomeric units are derived from one or more comonomers described herein and comprise on average per molecule, from > 0 to at most 50 weight percent, of the macromolecules.

Curable polyethylene-additive formulation. The curable polyethylene-additive formulation may contain at least 55 wt%, alternatively at least 70 wt%, alternatively at least 80 wt%, alternatively at least 90 wt% of the (A) polyolefin polymer; all based on total weight of the curable polyethylene-additive formulation. The curable polyethylene-additive formulation may be free of: (i) a dispersant, (ii) a polypropylene polymer, (iii) both (i) and (ii).

The curable polyethylene-additive formulation may be made by a number of different ways. In some aspects the curable polyethylene-additive formulation may be made by mixing a melt of the (A) polyolefin polymer with the (B) carbon black, (C) triazinyl-functional hindered piperidine, and (D) sulfur-containing hindered bisphenol (SCHBP) of formula (I), and any optional constituents (e.g., any zero, one or more of constituents (E) to (M)) to give the curable polyethylene-additive formulation as an admixture of constituents (A), (B), (C), (D), and 0, 1 or more of (E) to (M). The mixing may comprise compounding, kneading, or extruding. To facilitate mixing one or more constituents (e.g., (B), (C), (D), (E), etc.) may be provided in the form of an additive masterbatch in a portion of (A) or as a dispersion in a non-polar carrier resin other than (A). The non-polar carrier resin may be a polypropylene polymer.

Another way the curable polyethylene-additive formulation containing one or more optional constituents, such as additives (E) to (M), may be made is by making an unmelted form of a curable polyethylene-additive formulation consisting of (A), (B), (C), and (D) such as in pellets form, and contacting the unmelted form with the optional constituent(s). The contacting may comprise soaking, imbibing or injecting. The contacting may be carried out at a temperature from about 20° to 100° C. for 0.1 to 100 hours, e.g., 60° to 80° C. for 0.1 to 24 hours.

The curable polyethylene-additive formulation may be prepared as a one-part formulation, alternatively a multi-part formulation such as a two-part formulation, alternatively a three-part formulation. The one-part formulation contains all the constituents of the embodiment of the curable polyethylene-additive formulation. The multi-part formulation contains multiple parts with different ones or amounts of the constituents of the embodiment of the curable polyethylene-additive formulation in different parts. If desired, the different parts of the multi-part formulation may be combined to give the one-part formulation. There is no inherent reason why any combination of constituents cannot be included in either part or parts of these formulations.

The curable polyethylene-additive formulation may be in a divided solid form or in continuous form. The divided solid form may comprise granules, pellets, powder, or a combination of any two or more thereof. The continuous form may be a molded part (e.g., blow molded part) or an extruded part (e.g., an insulation layer of an electrical conductor device). The curable polyethylene-additive formulation may be crosslinkable by irradiation curing or organic peroxide/heat curing. If desired the crosslinkable polyolefin-additive formulation may be cooled to a storage temperature (e.g., 23° C.) and stored for a period of time of 1 hour, 1 week, 1 month, or longer.

Crosslinked polyolefin-additive product. The crosslinked polyolefin-additive product may contain at least 55 wt%, alternatively at least 70 wt%, alternatively at least 80 wt%, alternatively at least 90 wt% of the (A) polyolefin polymer; all based on total weight of the crosslinked polyolefin-additive product. The crosslinked polyolefin-additive product may be free of: (i) a dispersant, (ii) a polypropylene polymer, (iii) both (i) and (ii).

The crosslinked polyolefin-additive product may be in a divided solid form or in continuous form. The divided solid form may comprise granules, pellets, powder, or a combination of any two or more thereof. The continuous form may be a molded part (e.g., blow molded part) or an extruded part (e.g., an insulation layer of an electrical conductor device). If desired the crosslinked polyolefin-additive product may be stored at ambient temperature (e.g., 23° C.) and for a period of time of 1 hour, 1 week, 1 month, or longer.

Constituent (A) polyolefin polymer. The (A) polyolefin polymer may be a single-component polyolefin polymer (having a unimodal molecular weight distribution) or a blend of two or more polyolefin polymers. Each polyolefin polymer may be a single phase or multiphase (e.g., an amorphous phase and a crystalline phase) material, crosslinkable or crosslinked (cured). Copolymer includes bipolymers, terpolymers, etc.

The (A) polyolefin polymer may be a polyethylene homopolymer containing 99 to 100 wt% ethylenic monomeric units. The polyethylene homopolymer may be high density polyethylene (HDPE) homopolymer made by coordination polymerization or a low density polyethylene (LDPE) homopolymer made by radical polymerization.

Alternatively, the (A) polyolefin polymer may be an ethylene/alpha-olefin copolymer containing 50 to < 100 wt% ethylenic monomeric units and 50 to 0 wt% (C₃-C₂₀)alpha-olefin-derived comonomeric units. The ethylene/alpha-olefin copolymer embodiment of (A) polyolefin polymer may be a linear low density polyethylene (LLDPE), medium density polyethylene (MDPE), or high density polyethylene (HDPE). Alternatively, the polyethylene polymer may be a low density polyethylene (LDPE). The ethylene/alpha-olefin ("α-olefin") interpolymer having an α-olefin content of at least 1 wt%, at least 5 wt%, at least 10 wt%, at least 15 wt%, at least 20 wt%, or at least 25 wt% based on the entire interpolymer weight. These interpolymers can have an alpha-olefin content of less than 50 wt%, less than 45 wt%, less than 40 wt%, or less than 35 wt% based on the entire interpolymer weight. Illustrative ethylene/α-olefin interpolymers are ethylene/propylene, ethylene/1-butene, ethylene/1-hexene, ethylene/1-octene, ethylene/diene containing from 20 to 1 wt% diene comonomeric units, ethylene/propylene/1-octene, ethylene/propylene/1-butene, ethylene/1-butene/1-octene, ethylene/propylene/diene (EPDM) containing 50 to 100 wt% ethylene monomeric units, 49 to > 0 wt% of propylene comonomeric units, and 20 to 1 wt% diene comonomeric units. The diene used to make the diene comonomeric units in the ethylene/diene copolymer or in EPDM independently may be 1,3-butadiene, 1,5-hexadiene, 1,7-octadiene, ethylidene norbornene, dicyclopentadiene, vinyl norbornene, or a combination of any two or more thereof.

The (C₃-C₂₀)alpha-olefin of the ethylene/alpha-olefin copolymer aspect of the (A) polyolefin polymer may be a compound of formula (I): H₂C=C(H)-R (I), wherein R is a straight chain (C₁-C₁₈)alkyl group. (C₁-C₁₈)alkyl group is a monovalent unsubstituted olefin having from 1 to 18 carbon atoms. Examples of R are methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, and octadecyl. In some embodiments the (C₃-C₂₀)alpha-olefin is 1-propene, 1-butene, 1-hexene, or 1-octene; alternatively 1-butene, 1-hexene, or 1-octene; alternatively 1-butene or 1-hexene; alternatively 1-butene or 1-octene; alternatively 1-hexene or 1-octene; alternatively 1-butene; alternatively 1-hexene; alternatively 1-octene; alternatively a combination of any two of 1-butene, 1-hexene, and 1-octene. Alternatively, the alpha-olefin may have a cyclic structure such as cyclohexane or cyclopentane, resulting in an α-olefin such as 3-cyclohexyl-1-propene (allyl cyclohexane) and vinyl cyclohexane. The (C₃-C₂₀)alpha-olefin may be used as a comonomer with ethylene monomer.

Alternatively, the (A) polyolefin polymer may be the ethylene/olefin-functional silane copolymer. The olefin-functional silane comonomer used to make the ethylene/olefin-functional silane copolymer may be the hydrolyzable silane monomer of paragraph [0019] of WO 2016/200600 A1 (PCT/US16/033879 filed May 24, 2016) to Chaudhary; or of US 5,266,627 to Meverden et al. The olefin-functional hydrolyzable silane may be grafted (post-reactor) onto the copolymer embodiment of the (A). Alternatively, the olefin-functional hydrolyzable silane may be copolymerized with ethylene and the comonomer to directly make the copolymer embodiment containing hydrolyzable silyl groups. In some aspects the olefin-functional hydrolyzable silane is vinyltrimethoxysilane (VTMS), vinyltriethoxysilane (VTES), vinyltriacetoxysilane, or gamma-(meth)acryloxy propyl trimethoxy silane and the hydrolyzable silyl groups are 2-trimethoxysilylethyl, 2-triethoxysilylethyl, 2-triacetoxysilylethyl, or 3-trimethoxysilylpropyloxycarbonylethyl or 3-trimethoxysilylpropyloxycarbonylpropyl.

The (A) polyolefin polymer may be a blend of two or more different (A) polyolefin polymers or a reactor product of polymerization reactions with two or more different catalysts. The (A) polyolefin polymer may be made in two or more reactors, such as ELITE^{™} polymers from The Dow Chemical Company.

The (A) polyolefin polymer may be made by any suitable process, many of which are known. Any conventional or hereafter discovered process for producing polyethylene polymers may be used to prepare the (A). Typically the production process comprises one or more polymerization reactions. For example, the LDPE may be prepared using a high pressure polymerization process. Alternatively, the LDPE may be prepared using a coordination polymerization process conducted using one or more polymerization catalysts such as Ziegler-Natta, chromium oxide, metallocene, post-metallocene catalysts. Suitable temperatures are from 0° to 250° C., or 30° or 200° C. Suitable pressures are from atmospheric pressure (101 kPa) to 10,000 atmospheres (approximately 1,013 MegaPascals ("MPa")). In most polymerization reactions, the molar ratio of catalyst to polymerizable olefins (monomer/comonomer) employed is from 10⁻¹²:1 to 10⁻¹:1, or from 10⁻⁹:1 to 10⁻⁵:1.

Alternatively, (A) polyolefin polymer may be a polar organic polymer such as a polar ethylene-based polymer such as an ethylene/unsaturated carboxylic ester copolymer comprising ethylenic monomeric units and unsaturated carboxylic ester (or acid) comonomeric units. The proportion of the unsaturated carboxylic ester comonomeric units in the polar ethylene-based copolymer may be from 5 to 40 wt%, alternatively from 20 to 35 wt%, alternatively from 25 to 31 wt%, based on weight thereof. The ethylenic units may be from 95 to 60 wt%, alternatively from 80 to 65 wt%, alternatively from 75 to 69 wt% of the weight thereof. Each unsaturated carboxylic ester comonomer may independently have hydrogen atoms and from 3 to 20 carbon atoms per molecule, i.e., be a (C₃-C₂₀)unsaturated carboxylic ester comonomer.

The unsaturated carboxylic ester comonomer embodiment of (A) may be a vinyl (C₂-C₈)carboxylate and the ethylene/unsaturated carboxylic ester copolymer is an ethylene-vinyl (C₂-C₈)carboxylate copolymer. In some aspects the vinyl (C₂-C₈)carboxylate is a vinyl ester of a carboxylic acid anion having from 2 to 8 carbon atoms, alternatively 2 to 4 carbon atoms. Examples of the vinyl carboxylate esters are mentioned in US 7,767,910 B2, column 2, lines 34 to 50. The vinyl (C₂-C₈)carboxylate may be a vinyl (C₂-C₄)carboxylate such as vinyl acetate, vinyl propionate, or vinyl butanoate and the ethylene/unsaturated carboxylic ester copolymer may be an ethylene-vinyl (C₂-C₄)carboxylate bipolymer, alternatively an ethylene-vinyl acetate (EVA) bipolymer, alternatively an ethylene-vinyl propionate bipolymer, alternatively an ethylene-vinyl butanoate bipolymer. The EVA bipolymer consists essentially of ethylene-derived monomeric units and vinyl acetate-derived comonomeric units. The vinyl acetate comonomeric unit content of the EVA bipolymer may be from 5 to 40 wt%, alternatively from 20 to 35 wt%, alternatively from 25 to 31 wt%, based on weight of the EVA bipolymer. The wt% values are on average per molecule of the EVA. Alternatively or additionally, the EVA bipolymer may have a melt index (190° C., 2.16 kg) of from 2 to 60 g/10 min., alternatively 5 to 40 g/10 min. measured by ASTM D1238-04.

Alternatively, the unsaturated carboxylic ester comonomer embodiment of (A) may be an alkyl (meth)acrylate such as a (C₁-C₈)alkyl (meth)acrylate such as methyl acrylate and methyl methacrylate. The (C₁-C₈)alkyl (meth)acrylate may be found in an omitted ethylene/unsaturated carboxylic ester copolymer such as an ethylene-(C₁-C₈)alkyl (meth)acrylate copolymer (EAA). In some aspects the (C₁-C₈)alkyl may be a (C₁-C₄)alkyl, (C₅-C₈)alkyl, or (C₂-C₄)alkyl. The EAA consists essentially of ethylene-derived monomeric units and one or more different types of (C₁-C₈)alkyl (meth)acrylate-derived comonomeric units such as ethyl acrylate and/or ethyl methacrylate comonomeric units. The (C₁-C₈)alkyl may be methyl, ethyl, 1,1-dimethylethyl, butyl, or 2-ethylhexyl. The (meth)acrylate may be acrylate, methacrylate, or a combination thereof. The (C₁-C₈)alkyl (meth)acrylate may be ethyl acrylate and the EAA may be ethylene-ethyl acrylate copolymer (EEA) or the (C₁-C₈)alkyl (meth)acrylate may be ethyl methacrylate and the EAA may be ethylene-ethyl methacrylate copolymer (EEMA). The ethyl acrylate or ethyl methacrylate comonomeric unit content of EEA or EEMA, respectively, may independently be from 5 to 40 wt%, alternatively from 20 to 35 wt%, alternatively from 25 to 31 wt%, based on weight of the EEA or EEMA bipolymer.

The amount of the (A) polyolefin polymer may be from 70 to 98.9 wt%, alternatively from 80 to 95 wt%, alternatively from 80 to 98 wt% of the total weight of the crosslinkable polyolefin-additive formulation.

Constituent (B): carbon black. The (B) carbon black may be any carbon black suitable for use in insulation layers or semiconductive layers of power cables. In some aspects the (B) carbon black may be Printex XE2 carbon black (DeGussa), Black Pearls 1000 carbon black (Cabot Corp.), Vulcan XC 72 carbon black (Cabot Corp.), Ketjenblack EC600JD carbon black (Akzo), Vulcan P carbon black (Cabot Corp.), United 120 carbon black (Cabot Corp.), Denka Black carbon black (Denka), Vulcan XC 500 carbon black, or Acetylene Black AB 100%-01 carbon black (Soltex). The (B) carbon black may be from 0.15 to 4.9 wt%, alternatively from 0.2 to 4 wt%, alternatively from 0.5 to 3 wt% of the curable polyolefin-additive formulation.

Constituent (C) triazinyl-functional hindered piperidine. The (C) triazinyl-functional hindered piperidine may be any compound, oligomer, or polymer consisting of a triazinyl functional group (i.e., a 1,3,5-triazaphenyl) covalently bonded, directly or indirectly via a linking group, to a hindered piperidinyl functional group. The hindered piperidinyl functional group is a 2,6-dialkyl substituted piperidinyl group, a 2,2,6-trialkyl substituted piperidinyl group, or a 2,2,6,6-tetraalkyl substituted piperidinyl group. Each alkyl group of the hindered piperidinyl functional group independently is a (C1-C4 alkyl), e.g., methyl, ethyl, propyl, 1-methylethyl, or butyl; alternatively methyl. Examples of (C) are (i) a mixture of 1,3,5-Triazine-2,4,6-triamine, N,N'-[1,2-ethanediylbis[[[4,6-bis[butyl(1,2,2,6,6-pentamethyl-4-piperidinyl)amino]-1,3,5-triazin-2-yl]imino]-3,1propanediyl]]-bis[N,N'-dibutyl-N,N'-bis (1,2,2,6,6-pentamethyl-4-piperidinyl)-, and dimethyl succinate polymer with 4-hydroxy-2,2,6,6,-tetramethyl-1-piperidineethanol (e.g., Tinuvin 111); (ii) (poly[[6-(1,1,3,3-tetramethylbutyl) amino]-1,3,5-triazine-2,4-diyl][[2,2,6,6-tetramethyl-4-piperidyl)imino]lhexamethylene (2,2,6,6-tetramethyl-4-piperidyl)imino]]) (Chimassorb 944); (iii) (1,3,5-Triazine-2,4,6-triamine-N,N'-[1,2-ethanediylbis[[[4. 6-bis[butyl(1,2,2,6,6-pentamethyl-4-peperidinyl)amino]-1,3,5-triazin-2-yl] imino]-3,1-propanediyl]]-bis[N,N'-dibutyl-N,N'-bis (1,2,2,6,6-pentamethyl-4-piperidinyl) (Chimassorb 119); and (iv) a reaction product of 1,6-hexanediamine, N,N'-bis(2,2,6,6-tetramethyl-4-piperidinyl)-polymer with 2,4,6-trichloro-1,3,5-triazine with N-butyl-1-butanamine and N-butyl-2,2,6,6-tetramethyl-4-piperidinamine (Chimassorb 2020, CAS 192268-64-7). The (C) triazinyl-functional hindered piperidine may be from 0.15 to 4.9 wt%, alternatively from 0.2 to 4 wt%, alternatively from 0.5 to 3 wt% of the curable polyolefin-additive formulation.

Constituent (D) sulfur-containing hindered bisphenol (SCHBP) antioxidant. The SCHBP may be any compound of formula (I) described earlier, or a combination of two or more such compounds. The SCHBP may be a thiobis(1,1-dimethylethyl-substituted phenol) wherein the 1,1-dimethylethyl group is ortho to the hydroxyl group of the phenol; alternatively a thiobis(1,1-dimethylethyl-substituted methyl-substituted phenol) wherein the 1,1-dimethylethyl group is ortho to the hydroxyl group of the phenol. The SCHBP may be 4,4'-thiobis(2-(1,1-dimethylethyl)-5-methylphenol) (also known as 4,4'-thiobis(2-tert-butyl-5-methylphenol) and having CAS No. 96-69-5) or 2,2'-thiobis(6-(1,1-dimethylethyl)-4-methylphenol) and having CAS No. 90-66-4. Alternatively, the SCHBP may be 4,4'-thiobis(2-(1,1-dimethylethyl)-5-methylphenol). The (D) SCHBP antioxidant may be from 0.10 to 0.94 wt%, alternatively from 0.15 to 0.90 wt%, alternatively from 0.2 to 0.84 wt% of the curable polyolefin-additive formulation.

The optional constituent (E): organic peroxide. A molecule containing carbon atoms, hydrogen atoms, and two or more oxygen atoms, and having at least one -O-O- group, with the proviso that when there are more than one -O-O- group, each -O-O- group is bonded indirectly to another -O-O- group via one or more carbon atoms; or collection of such molecules. The (E) organic peroxide may be added to the crosslinkable polyolefin-additive formulation if curing of the crosslinkable polyolefin-additive formulation is desired, especially curing comprising heating the crosslinkable polyolefin-additive formulation comprising constituents (A) to (D) and (E) to a temperature at or above the (E) organic peroxide's decomposition temperature. The (E) organic peroxide may be a monoperoxide of formula R^{O}-O-O-R^{O}, wherein each R^{O} independently is a (C₁-C₂₀)alkyl group or (C₆-C₂₀)aryl group. Each (C₁-C₂₀)alkyl group independently is unsubstituted or substituted with 1 or 2 (C₆-C₁₂)aryl groups. Each (C₆-C₂₀)aryl group is unsubstituted or substituted with 1 to 4 (C₁-C₁₀)alkyl groups. Alternatively, the (E) may be a diperoxide of formula R^{O}-O-O-R-O-OR^{O}, wherein R is a divalent hydrocarbon group such as a (C₂-C₁₀)alkylene, (C₃-C₁₀)cycloalkylene, or phenylene, and each R^{O} is as defined above. The (E) organic peroxide may be bis(1,1-dimethylethyl) peroxide; bis(1,1-dimethylpropyl) peroxide; 2,5-dimethyl-2,5-bis(1,1-dimethylethylperoxy) hexane; 2,5-dimethyl-2,5-bis(1,1-dimethylethylperoxy) hexyne; 4,4-bis(1,1-dimethylethylperoxy) valeric acid; butyl ester; 1,1-bis(1,1-dimethylethylperoxy)-3,3,5-trimethylcyclohexane; benzoyl peroxide; tert-butyl peroxybenzoate; di-tert-amyl peroxide ("DTAP"); bis(alpha-t-butyl-peroxyisopropyl) benzene ("BIPB"); isopropylcumyl t-butyl peroxide; t-butylcumylperoxide; di-t-butyl peroxide; 2,5-bis(t-butylperoxy)-2,5-dimethylhexane; 2,5-bis(t-butylperoxy)-2,5-dimethylhexyne-3,1,1-bis(t-butylperoxy)-3,3,5-trimethylcyclohexane; isopropylcumyl cumylperoxide; butyl 4,4-di(tert-butylperoxy) valerate; or di(isopropylcumyl) peroxide; or dicumyl peroxide. The (E) organic peroxide may be dicumyl peroxide. In some aspects only a blend of two or more (E) organic peroxides is used, e.g., a 20:80 (wt/wt) blend of t-butyl cumyl peroxide and bis(t-butyl peroxy isopropyl)benzene (e.g., LUPEROX D446B, which is commercially available from Arkema). In some aspects at least one, alternatively each (E) organic peroxide contains one -O-O-group. In some aspects the crosslinkable polyolefin-additive formulation and crosslinked polyethylene product is free of (E). When present, the (E) organic peroxide may be 0.05 to 3.0 wt%, alternatively 0.1 to 3 wt%, alternatively 0.5 to 2.5 wt% of the crosslinkable polyolefin-additive formulation. The weight/weight ratio of (D) SCHBP antioxidant to (E) organic peroxide may be less than 2 ((D)/(E) (wt/wt) < 2).

The optional constituent (F) antioxidant having a structure different than the formula (I). The (F) may be used to provide additional antioxidizing properties to the crosslinkable polyolefin-additive formulation and/or the crosslinked polyolefin-additive product. Examples of suitable (F) are bis(4-(1-methyl-1-phenylethyl)phenyl)amine (e.g., NAUGARD 445); 2,2'-methylene-bis(4-methyl-6-t-butylphenol) (e.g., VANOX MBPC); 2,2'-thiobis(2-t-butyl-5-methylphenol (CAS No. 90-66-4, commercially LOWINOX TBM-6); 2,2'-thiobis(6-t-butyl-4-methylphenol (CAS No. 90-66-4, commercially LOWINOX TBP-6); tris[(4-tert-butyl-3-hydroxy-2,6-dimethylphenyl)methyl]-1,3,5-triazine-2,4,6-trione (e.g., CYANOX 1790); pentaerythritol tetrakis(3-(3,5-bis(1,1-dimethylethyl)-4-hydroxyphenyl)propionate (e.g., IRGANOX 1010, CAS Number 6683-19-8); 3,5-bis(1,1-dimethylethyl)-4-hydroxybenzenepropanoic acid 2,2'- thiodiethanediyl ester (e.g., IRGANOX 1035, CAS Number 41484-35-9); and distearyl thiodipropionate ("DSTDP"). In some aspects the crosslinkable polyolefin-additive formulation and the crosslinked polyolefin-additive product are free of (F). When present, the (F) may be 0.01 to 1.5 wt%, alternatively 0.05 to 1.2 wt%, alternatively 0.1 to 1.0 wt% of the crosslinkable polyolefin-additive formulation.

The optional constituent (G) processing aid. Additive (G) may improve flow of a melt of the crosslinkable polyolefin-additive formulation through a machine. (G) may be an organic processing aid such as a fluoropolymer or a silicone processing aid such as a polyorganosiloxane or fluoro-functionalized polyorganosiloxane. In some aspects the crosslinkable polyolefin-additive formulation and the crosslinked polyolefin-additive product are free of (G). When present, the additive (G) may be used at a concentration of from 1 to 20 wt%, alternatively 2 to 18 wt%, alternatively 3 to 15 wt%, based on total weight of the crosslinkable polyolefin-additive formulation.

The optional constituent (H) a colorant. E.g., a pigment or dye. E.g., carbon black or titanium dioxide. The carbon black may be provided as a carbon black masterbatch that is a formulation of poly(1-butene-co-ethylene) copolymer (from ≥ 95 wt% to < 100 wt% of the total weight of the masterbatch) and carbon black (from > 0 wt% to ≤ 5 wt% of the total weight of the masterbatch. In some aspects the crosslinkable polyolefin-additive formulation and the crosslinked polyolefin-additive product are free of (H). When present, the (H) colorant may be from 0.1 to 35 wt%, alternatively 1 to 10 wt%, based on total weight of the crosslinkable polyolefin-additive formulation.

The optional constituent (I) a metal deactivator. E.g., oxaylyl bis(benzylidene hydrazide) (OABH). In some aspects the crosslinkable polyolefin-additive formulation and the crosslinked polyolefin-additive product are free of (I). When present, the additive (I) may be from 0.001 to 0.2 wt%, alternatively 0.01 to 0.15 wt%, alternatively 0.01 to 0.10 wt%, all based on total weight of the crosslinkable polyolefin-additive formulation.

The optional constituent (J) olefin-functional hydrolyzable silane. Additive (J) may be any monosilane containing at least 1, alternatively at least 2, alternatively 3 olefinic groups and at most 3, alternatively at most 2, alternatively 1 hydrolyzable groups (e.g., alkoxy groups). Examples of (J) are is vinyltrimethoxysilane (VTMS), vinyltriethoxysilane (VTES), vinyltriacetoxysilane, or gamma-(meth)acryloxy propyl trimethoxy silane and the hydrolyzable silyl groups are 2-trimethoxysilylethyl, 2-triethoxysilylethyl, 2-triacetoxysilylethyl, or 3-trimethoxysilylpropyloxycarbonylethyl or 3-trimethoxysilylpropyloxycarbonylpropy. In some aspects the crosslinkable polyolefin-additive formulation and the crosslinked polyolefin-additive product are free of (J). When present, additive (J) may be from 0.1 to 2 wt%, alternatively 0.1 to 1.5 wt%, alternatively 0.1 to 1.0 wt%; all based on total weight of the crosslinkable polyolefin-additive formulation. When present, the crosslinkable polyolefin-additive formulation may further comprise a catalytically effective amount of a condensation catalyst, such as dibutyltin dilaurate.

The optional constituent (K) a corrosion inhibitor. E.g., tin (II) sulfate. In some aspects the crosslinkable polyolefin-additive formulation and the crosslinked polyolefin-additive product are free of (K). When present, the additive (K) may be from 0.00001 to 0.1 wt%, alternatively 0.0001 to 0.01 wt%, based on total weight of the crosslinkable polyolefin-additive formulation.

The optional constituent (L) flame retardant. The (L) flame retardant may be decabromodiphenyl ether; decabromodiphenylethane; a brominated organic polymer; antimony trioxide (a flame retardant synergist); aluminum trihydroxide; magnesium hydroxide; N,N'-ethylenebis(3,4,5,6-tetrabromophthalimide); a flame retardant silicone; or a combination of any two or more thereof. Examples of the brominated organic polymer are a brominated polystyrene; a brominated rubber a poly(vinyl bromide); a poly(vinylidene bromide); a poly(brominated-alkyl acrylate); a poly(alkyl brominated-acrylate); and a brominated butadiene-styrene copolymer. Examples of the brominated polystyrene are poly(4-bromostyrene) and poly(bromostyrene). Examples of the brominated rubber are brominated natural rubber and brominated synthetic organic rubber. Examples of the poly(brominated-alkyl acrylate) are a poly(2-bromoethyl methacrylate) and a poly(2,3-dibromopropyl methacrylate. An example of the poly(alkyl brominated-acrylate) is a poly(methyl-alpha-bromoacrylate). Examples of the flame retardant silicone are flame retardant silicone rubber, DOW CORNING 11-100 Additive, and DOW CORNING 4-7081 Resin Modifier. Alternatively the flame retardant masterbatch composition may be free of a HDPE. A flame retardant synergist is an additive that enhances (increases) flame retarding properties of a mineral flame retardant. Flame retardant synergist are useful as additives in wire and cable insulation formulations. In some aspects the crosslinkable polyolefin-additive formulation and the crosslinked polyolefin-additive product are free of (L). When present, (L) may be used at a concentration of from 0.1 to 10 wt%, alternatively 0.5 to 8 wt%, alternatively 0.3 to 5 wt%, based on total weight of the crosslinkable polyolefin-additive formulation.

The optional constituent (M) filler. The (M) filler may be calcium carbonate, zinc borate, zinc molybdate, zinc sulfide, talc, magnesium oxide, zinc oxide, or a clay. In some aspects the crosslinkable polyolefin-additive formulation and the crosslinked polyolefin-additive product are free of (M). When present, (M) may be used at a concentration of from 1 to 20 wt%, alternatively 2 to 18 wt%, alternatively 3 to 15 wt%, based on total weight of the crosslinkable polyolefin-additive formulation.

The crosslinkable polyolefin-additive formulation may further comprise other additives selected from a lubricant and an anti-blocking agent.

The optional additives may be used to impart to either to the inventive formulation and/or to the inventive product one or more beneficial properties.

The electrical conductor device: coated metal wire, electrical cable, or power cable, such as for use in low, medium, high and extra-high voltage electricity-transmitting applications. A "wire" means a single strand or filament of conductive material, e.g., conductive metal such as copper or aluminum, or a single strand or filament of optical fiber. A "power cable" comprises at least one wire disposed within a semiconductive layer and a covering that may be referred to as an insulation layer. The electrical conductor device may be designed and constructed for use in medium, high, or extra-high voltage applications. Examples of suitable cable designs are shown in US 5,246,783; US 6,496,629; and US 6,714,707.

The electrical conductor device may contain, from inside out, a conductive core, an inner semiconductive layer, and, optionally, an inner insulation layer. The optional insulated aspect of the electrical conductor device may contain an outer semiconductive layer and an outer insulation layer. The conductive core may be composed of one or more metal wires. When the conductive core is "stranded", it contains two or more metal wires, which may be sub-divided into discrete wire bundles. Each wire in the conductive core, whether bundled or not, may be individually coated with an insulation layer and/or the discrete bundles may be coated with an insulation layer. Each insulation layer independently may be a single layer or multilayer covering, coating or sheath. The insulation layer(s) primarily function(s) to protect or insulate the conductive core and semiconductive layer(s) from external environments such as sunlight, water, heat, oxygen, other conductive materials (e.g., to prevent short-circuiting), and/or corrosive materials (e.g., chemical fumes).

The single layer or multilayer covering from one insulated electrical conductor device to the next may be configured differently depending upon their respective intended uses. For example, viewed in cross-section, the multilayer covering of the insulated electrical conductor device may be configured sequentially from its innermost layer to its outermost layer with the following components: an inner semiconducting layer (in physical contact with the conductive core), an insulation layer comprising the crosslinked polyethylene product (inventive crosslinked product), an outer semiconducting layer, a metal shield, and a protective sheath. The layers and sheath are circumferentially and coaxially (longitudinally) continuous. The metal shield (ground) is coaxially continuous, and circumferentially either continuous (a layer) or discontinuous (tape or wire). The outer semiconducting layer, when present, may be composed of a peroxide-crosslinked semiconducting product that may be strippable from the insulation layer.

The method of conducting electricity. The inventive method of conducting electricity may use the electrical conductor device or may use a different electrical conductor device that includes the inventive formulation or product.

The electrical conductor device is useful for data-transmitting applications and/or for electricity-transmitting applications, including low, medium, high, and ultra-high voltage applications.

The inventive formulation and product are useful in a variety of other applications including in containers, vehicle parts, and electronics packaging.

Any compound herein includes all its isotopic forms, including natural abundance forms and/or isotopically-enriched forms, which may have medical or anti-counterfeiting uses.

In some aspects any compound, composition, formulation, material, mixture, or reaction product herein may be free of any one of the chemical elements selected from the group consisting of: H, Li, Be, B, C, N, O, F, Na, Mg, Al, Si, P, S, Cl, K, Ca, Sc, Ti, V, Cr, Mn, Fe, Co, Ni, Cu, Zn, Ga, Ge, As, Se, Br, Rb, Sr, Y, Zr, Nb, Mo, Tc, Ru, Rh, Pd, Ag, Cd, In, Sn, Sb, Te, I, Cs, Ba, Hf, Ta, W, Re, Os, Ir, Pt, Au, Hg, Tl, Pb, Bi, lanthanoids, and actinoids; with the proviso that chemical elements required by the compound, composition, formulation, material, mixture, or reaction product (e.g., C and H required by a polyethylene or C, H, and O required by an alcohol) are not counted.

The following apply unless indicated otherwise. Alternatively precedes a distinct embodiment. ASTM means the standards organization, ASTM International, West Conshohocken, Pennsylvania, USA. IEC means the standards organization, International Electrotechnical Commission, Geneva, Switzerland. Any comparative example is used for illustration purposes only and shall not be prior art. Free of or lacks means a complete absence of; alternatively not detectable. IUPAC is International Union of Pure and Applied Chemistry (IUPAC Secretariat, Research Triangle Park, North Carolina, USA). May confers a permitted choice, not an imperative. Operative means functionally capable or effective. Optional(ly) means is absent (or excluded), alternatively is present (or included). Properties are measured using a standard test method and conditions for the measuring (e.g., viscosity: 23° C and 101.3 kPa). Ranges include endpoints, subranges, and whole and/or fractional values subsumed therein, except a range of integers does not include fractional values. Room temperature: 23° C. ± 1° C.

Carbon Black Particle Size Test Method: ASTM D3849-14a, *Standard Test Method for Carbon Black-Morphological Characterization of Carbon Black Using Electron Microscopy.* The morphological characterization of carbon black includes particle size and shape and is obtained from transmission electron microscope images, which are used to derive the mean particle and aggregate size of carbon black in the dry state (as manufactured).

Peroxide-free crosslinkable polyolefin-additive formulation Preparation Method. Use a 300 g-size Brabender mixer operated at 180° C. and 30 rotations per minute (rpm) to melt constituent (A) and mix it with constituents (B) to (D) and any optional constituents (F) to (M), but not including optional constituent (E) organic peroxide, to give the crosslinkable polyolefin-additive formulation free of (E).

Peroxide-containing crosslinkable polyolefin-additive formulation Preparation Method: The crosslinkable polyolefin-additive formulation free of (E), prepared in the Peroxide-free crosslinkable polyolefin-additive formulation Preparation Method, is cooled to 100° to 110° C. in the Brabender mixer, and to the cooled mixture is added (E) organic peroxide with mixing at 30 rpm for 10 minutes to give a crosslinkable polyolefin-additive formulation containing constituents (A) to (E) and any optional constituents (F) to (M). This formulation is cooled to below 50° C and removed from the Brabender mixer to give peroxide-containing crosslinkable polyolefin-additive formulation containing constituents (A) to (E) and any optional constituents (F) to (M).

Compression Molded Plaque Preparation Method. The peroxide-containing crosslinkable polyolefin-additive formulation containing constituents (A) to (E) and any optional constituents (F) to (M) prepared above is heated and compressed in a mold at 120° C and pressure of 13.8 MPa (2,000 pounds per square inch (psi)) for 5 minutes, and then crosslinked within the mold at 185° C and 345 MPa (25 tons per square inch) for 10 minutes, cooled to room temperature, and removed from the mold to give a compression molded plaque of crosslinked polyolefin-additive product having a specified thickness of 1.905 millimeters (mm, 75 mils).

Crosslinked Polyolefin-Additive Product Preparation Method. The peroxide-containing crosslinkable polyolefin-additive formulation containing constituents (A) to (E) and any optional constituents (F) to (M) prepared above is heated at 180 C. for 15 minutes to give a crosslinked polyolefin-additive product.

Density Test Method: measured according to ASTM D792-13, *Standard Test Methods for Density and Specific Gravity (Relative Density) of Plastics by Displacement,* Method B (for testing solid plastics in liquids other than water, e.g., in liquid 2-propanol). Report results in units of grams per cubic centimeter (g/cm³).

Dielectric Constant and Dissipation Factor Test Methods. Conduct tests according to ASTM D1531-06, *Standard Test Methods for Relative Permittivity (Dielectric Constant) and Dissipation Factor by Fluid Displacement Procedures* at 23° C. and 1 megahertz MHz using the following fluid: Silicone 200 Fluid from Dow Corning Corporation. For compounds used in electrical power cables, a desired dielectric constant is from greater than 0 to less than 2.8, and a desired dissipation factor is from greater than 0 to less than 0.5 at 23 C. and 1 MHz measured according to ASTM D1531-06.

Alternatively, dielectric constant and dissipation factor may be tested according to ASTM D150-11, *Standard Test Methods for AC Loss Characteristics and Permittivity (Dielectric Constant) of Solid Electrical Insulation,* at 50 Hz on a High Precision High Voltage Capacitance Bridge, QS87 from Shanghai Young Electrical Co. Ltd. with an electrode containing specimen holder in an oven, the high voltage power was YG8Q from Shanghai Young Electrical Co. Ltd.. Test specimen is a cured (crosslinked) compression molded plaque prepared by Crosslinked Polyolefin Product and Compression Molded Plaque Preparation Method 1. Degas the plaque in a vacuum oven at 70° C. for 24 hours under atmospheric pressure. Trim test specimen, test thickness, and then sandwich between two electrodes in an oven at 110° C. immediately after the electrode temperature reached 100° C. Set potential at 2.5 kilovolts (kV), 5 kV, 7.5 kV, 10 kV, 7.5 kV, 5 kV, and 2.5 kV (all at 50 Hertz) across the film; calculate electrical stress on the film as equal to the applied voltage across the film divided by the thickness of the film in millimeters (mm); and test dissipation factor ("DF") and relative permittivity (i.e., dielectric constant, εᵣ). Obtain a dissipation factor (DF) curve at different electrical stress values, typically plotted over a range from 5 kV/mm to 25 kV/mm. From the curve, calculate the DF value for electrical stress equal to 16 kV/mm.

Elongation-at-Break Test Method. Measured on 5 inches (12.7 centimeter (cm)) long, fully cured and heat aged test samples, prepared according to the Crosslinked Polyolefin-Additive Product Preparation Method described above and Heat Aging Test Method described below, using an Instron machine and 10 inches per minute (25.4 cm per minute) according to IEC 60502, and expressed as a percent. Minimum value per IEC 60502 specifications is 200%.

Heat Aging Test Method (Thermal Aging Test Method). Test samples are 1.905 mm thick (75 mils thick) compression molded plaques prepared according to the Compression Molded Plaque Preparation Method described earlier. Place test sample in a thermal convection oven at 150 C. for 168 hours to give heat aged test sample. Remove heat aged test sample from oven and allow to cool to room temperature.

Melt index (190° C., 2.16 kilograms (kg), "I₂") Test Method: for non-polar ethylene-based polymer is measured according to ASTM D1238-04, *Standard Test Method for Melt Flow Rates of Thermoplastics by Extrusion Platometer,* using conditions of 190° C./2.16 kilograms (kg), formerly known as "Condition E" and also known as I₂. Report results in units of grams eluted per 10 minutes (g/10 min.).

Moving Die Rheometer (MDR) Test Method (MDR: ML at 182° C. (N-m), MDR: MH-ML at 182° C. (N-m)): ASTM D5289-12, *Standard Test Method for Rubber Property-Vulcanization Using Rotorless Cure Meters.* Measure torque of a 6 grams cold pressed test sample using the following procedure. Heat test sample, obtained directly from a Brabender mixing bowl, in a moving die rheometer (MDR) instrument MDR2000 (Alpha Technologies) at 182° C. for 20 minutes at 0.5 degrees arc oscillation, while monitoring change in torque. Designate the lowest measured torque value as "ML", expressed in deciNewton-meter (dN-m). As curing or crosslinking progresses, the measured torque value increases, eventually reaching a maximum torque value. Designate the maximum or highest measured torque value as "MH", expressed in dN-m. All other things being equal, the greater the MH torque value, the greater the extent of crosslinking. Measured in pound-inches (lb.-in.), and converted to Newton-meter (N-m), wherein 1.00 lb.-in. = 0.113 N-m.

Oil Absorption Number (OAN) Test Method: use ASTM D2414-17 (*Standard Test Method for Carbon Black-Oil Absorption Number (OAN)*), Procedure A with dibutyl phthalate (DBP). Expressed as mL/100 g or volume in milliliters of DBP absorbed per 100 grams of carbon black.

QUV Aging Test Method. Test samples are 1.905 mm thick (75 mils thick) compression molded plaques prepared according to the Compression Molded Plaque Preparation Method described earlier. An indoor accelerated laboratory test with controlled artificial light sources to simulate natural sunlight. Use a heated QUV test chamber containing fluorescent lamps to provide an irradiation spectrum centered in the ultraviolet wavelengths. Provide moisture by forced condensation, and control temperature using heaters. Subject test samples to alternating cycles of (a) exposure to heat, ultraviolet irradiation and moisture and (b) exposure to heat and moisture, but not ultraviolet irradiation. Each cycle (a) is done for 20 hours at 70° C. and 340 nm wavelength of UV irradiation at an intensity of 0.89 Watt per square meter surface area of the test sample per nanometer wavelength of the UV light (W/m²/nm) under moisture exposure via condensation under 100% relative humidity. exposure to moisture is done by condensation. Each cyclic (b) is done for 4 hours of moisture exposure via condensation under 100% relative humidity in air at 60° C. Continue alternating the cycles (a) and (b) for a period of 1,000 hours, which simulates a long application period in the real world.

Tensile Strength Test Method. Measured on 5 inches (12.7 centimeters (cm)) long, fully cured and heat aged test samples, prepared according to the Crosslinked Polyolefin-Additive Product Preparation Method and Heat Aging Test Method described above, using an Instron machine and 10 inches per minute (25.4 cm per minute) according to IEC 60502, and expressed as pounds per square inch (psi). Minimum value per IEC 60502 specifications is 1,800 psi (12,000 kilopascals (kPa)).

### EXAMPLES

Polyolefin polymer (A1): a low density polyethylene (LDPE) polymer having a density of 0.92 g/cm³ and a melt index (I₂) of 2 g/10 min. Available as product DXM-447 from The Dow Chemical Company, Midland, Michigan, USA.

Carbon black (B1): having an average particle size of 19 nanometers (nm), measured by transmission electron microscopy according to ASTM D3849-14a, and an oil absorption number of 100 to 110 mL/100 g (ASTM D2414-17). Available from Cabot Corporation, Billerica, Massachusetts, USA.

Triazinyl-functional hindered piperidine (C1): (poly[[6-(1,1,3,3-tetramethylbutyl) amino]-1,3,5-triazine-2,4-diyl][[2,2,6,6-tetramethyl-4-piperidyl)imino]]hexamethylene (2,2,6,6-tetramethyl-4-piperidyl)imino]]). Available as Chimassorb 944 from BASF Corporation, Florham Park, New Jersey, USA. Has the following structure: 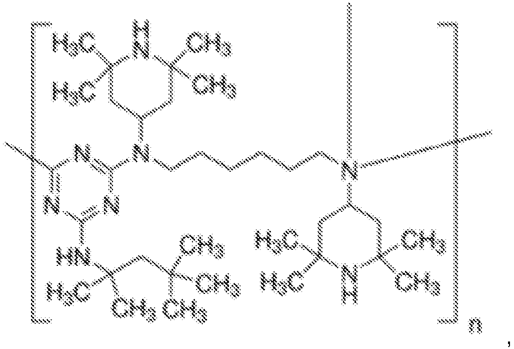 wherein subscript n is a rational or irrational number chosen such that (C1) has a weight-average molecular weight of from 2,000 to 3,100 g/mol. (C1) has CAS No. 71878-19-8.

Sulfur-containing hindered bisphenol (D1): 4,4'-thiobis(2-(1,1-dimethylethyl)-5-methylphenol). Available from Addivant, Danbury, Connecticut, USA. (D1) has the following structure:

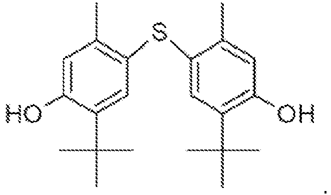

Organic Peroxide (E1): dicumyl peroxide. Available from AkzoNobel, Amsterdam, The Netherlands.

Comparative Examples 1 to 7 (CE1 to CE7): comparative crosslinkable polyolefin-additive formulations. See compositions and test results described in Table 1 later.

Inventive Examples 1 to 8 (IE1 to IE8): inventive crosslinkable polyolefin-additive formulations. See compositions and test results described in Tables 2 and 3 below.

**Table 1: Semiconductive composite materials CE1 to CE7 and Test Results. ("0" means 0.00)**

| Constituent (wt%) | CE1 | CE2 | CE3 | CE4 | CE5 | CE6 | CE7 |
|---|---|---|---|---|---|---|---|
| LDPE (A1) | 96.2 | 96.2 | 95.8 | 97.2 | 97.44 | 95.84 | 97.2 |
| CB (B1) | 0 | 2.0 | 2.0 | 0.8 | 0 | 2.0 | 0 |
| HALS (C1) | 2.0 | 0 | 0.4 | 0 | 0.4 | 0 | 0 |
| SCHBP (D1) | 0 | 0 | 0 | 0.2 | 0.36 | 0.36 | 1.0 |
| DCP (E1) | 1.8 | 1.8 | 1.8 | 1.8 | 1.8 | 1.8 | 1.8 |
| Example Total | 100.0 | 100.0 | 100.0 | 100.0 | 100.0 | 100.0 | 100.0 |
| Tensile Strength (heat aged @ 150° C. for 168 hours, MPa) | 11.3 | 6.3 | 7.8 | 11.1 | 10.0 | 13.7 | failed |
| Elongation-at-break (heat aged @ 150° C. for 168 hours, %) | 316 | 38 | 31 | 361 | 271 | 475 | failed |
| Tensile Strength (QUV aged for 1000 hours, MPa) | 9.3 | 14.8 | 18.9 | 9.9 | 8.7 | 10.0 | 10.2 |
| Elongation-at-break (QUV aged for 1000 hours, %) | 277 | 446 | 499 | 286 | 78 | 299 | 81 |
| MDR MH (182° C., N-m) | 0.47 | 0.35 | 0.42 | 0.38 | 0.30 | 0.29 | 0.06 |
| Dielectric Constant (ASTM D1531-06, 23° C.,1 MHz) | 2.371 | 2.292 | 2.34 | 2.32 | 2.287 | 2.377 | 2.289 |
| Dissipation Factor (ASTM D1531-06, 23° C.,1 MHz) | 0.0001 | 0.0002 | 0.002 | 0.0001 | 0.0000 8 | 0.0001 | 0.0001 |

Table 1 summarizes data of comparative composite materials containing constituent (A) but lacking one or two of the constituents (B) to (D). As shown by the data in Table 1, CE1 to CE6 CE1 with 2 wt% of constituent (C) triazinyl-functional hindered piperidine, and lacking constituents (B) carbon black and (D) SCHBP of formula (I), has too low elongation-at-break (less than 300%) after QUV aging for 1,000 hours. CE2 with 2 wt% of constituent (B) carbon black, and lacking constituents (C) triazinyl-functional hindered piperidine and (D) SCHBP of formula (I), has too low elongation-at-break (well below 300%) after heat aging (thermal aging) at 150° C. for 168 hours. CE3 with constituents (B) carbon black and (C) triazinyl-functional hindered piperidine, and lacking constituent (D) SCHBP of formula (I), has too low elongation-at-break (well below 300%) after heat aging (thermal aging) at 150° C. for 168 hours. CE4 with constituents (B) carbon black and (D) SCHBP of formula (I), and lacking constituent (C) triazinyl-functional hindered piperidine, has too low elongation-at-break (below 300%) after QUV aging for 1,000 hours. CE5 with constituents (C) triazinyl-functional hindered piperidine and (D) SCHBP of formula (I), and lacking constituent (B) carbon black, has too low elongation-at-break (well below 300%) after heat aging (thermal aging) at 150° C. for 168 hours and too low elongation-at-break (well below 300%) after QUV aging for 1,000 hours. CE6 with constituents (B) carbon black and (D) SCHBP of formula (I) (at increased loadings relative to CE4), and lacking constituent (C) triazinyl-functional hindered piperidine, has improved but still too low elongation-at-break (below 300%) after heat aging (thermal aging) at 150° C. for 168 hours. CE7 with 1 wt% of constituent (D) SCHBP of formula (I), and lacking constituents (B) carbon black and (C) triazinyl-functional hindered piperidine, is brittle after heat aging (thermal aging) at 150° C. for 168 hours and has too low elongation-at-break (well below 300%) after QUV aging for 1,000 hours.

**Table 2: Semiconductive composite materials IE1 to IE7 and Test Results. ("0" means 0.00, N/m means not measured)**

| Constituent (wt%) | IE1 | IE2 | IE3 | IE4 | IE5 | IE6 | IE7 |
|---|---|---|---|---|---|---|---|
| LDPE (A1) | 96.34 | 95.34 | 97.34 | 94.44 | 95.7 | 94.8 | 96.74 |
| CB (B1) | 1.0 | 2.0 | 0.1 | 3.0 | 2.0 | 2.0 | 1.0 |
| HALS (C1) | 0.4 | 0.4 | 0.4 | 0.4 | 0.4 | 0.4 | 0.1 |
| SCHBP (D1) | 0.36 | 0.36 | 0.36 | 0.36 | 0.1 | 1.00 | 0.36 |
| DCP (E1) | 1.8 | 1.8 | 1.8 | 1.8 | 1.8 | 1.8 | 1.8 |
| Example Total | 100.0 | 100.0 | 100.0 | 100.0 | 100.0 | 100.0 | 100.0 |
| Tensile Strength (heat aged @ 150° C. for 168 hours, MPa) | 9.9 | 10.7 | 12.9 | 10.7 | 8.7 | 12.7 | 9.1 |
| Elongation-at-break (heat aged @ 150° C. for 168 hours, %) | 337 | 328 | 445 | 326 | 107 | 463 | 75 |
| Tensile Strength (QUV aged for 1000 hours, MPa) | 18.5 | 20.6 | 11.4 | 12.5 | 12.9 | 9.6 | 9.6 |
| Elongation-at-break (QUV aged for 1000 hours, %) | 526 | 545 | 404 | 446 | 401 | 341 | 326 |
| MDR MH (182° C., N-m) | 0.34 | 0.34 | 0.29 | 0.27 | 0.40 | 0.14 | 0.31 |
| Dielectric Constant (ASTM D1531-06, 23° C.,1 MHz) | 2.34 | 2.39 | 2.29 | 2.41 | 2.37 | 2.38 | 2.37 |
| Dissipation Factor (ASTM D1531-06, 23° C.,1 MHz) | 0.0002 6 | 0.0003 4 | 0.0001 2 | 0.0001 5 | 0.0001 2 | 0.0001 3 | 0.0001 3 |

**Table 3: Semiconductive composite material IE8 and Test Results. ("0" means 0.00, N/m means not measured)**

| Constituent (wt%) | IE8 |
|---|---|
| LDPE (A1) | 93.84 |
| CB (B1) | 1.0 |
| HALS (C1) | 3.0 |
| SCHBP (D1) | 0.36 |
| DCP (E1) | 1.8 |
| Example Total | 100.00 |
| Tensile Strength (heat aged @ 150° C. for 168 hours, MPa) | 14.1 |
| Elongation-at-break (heat aged @ 150° C. for 168 hours, %) | 584 |
| Tensile Strength (QUV aged for 1000 hours, MPa) | 10.3 |
| Elongation-at-break (QUV aged for 1000 hours, %) | 428 |
| MDR MH (182° C., N-m) | 0.21 |
| Dielectric Constant (ASTM D1531-06, 23° C.,1 MHz) | 2.34 |
| Dissipation Factor (ASTM D1531-06, 23° C.,1 MHz) | 0.0001 3 |

In Tables 2 and 3 summarize data of inventive composite materials containing constituent (A) and each of the constituents (B) to (D), wherein the data shown unexpected improvements (increases) in tensile strength and/or elongation-at-break after heat aging (thermal aging) and/or QUV aging. IE1 to IE4 show synergistic improvements (increases) in elongation-at-break (greater than 300%) after heat aging (thermal aging) at 150° C. for 168 hours and improvements (increases) in elongation-at-break (greater than 400%) after QUV aging for 1,000 hours. IE5 has a loading of 0.1 wt% of constituent (D) SCHBP of formula (I) and yet showed an improved (increased) elongation-at-break (greater than 400%) after QUV aging for 1,000 hours. IE6 has a loading of 1 wt% of constituent (D) SCHBP of formula (I) and showed improved (increased) elongation-at-break (greater than 300% or greater than 400%) after heat aging (thermal aging) at 150° C. for 168 hours and after QUV aging for 1,000 hours. IE7 has a loading of 0.1 wt% of constituent (C) triazinyl-functional hindered piperidine and has improved (increased) tensile strength and improved (increased) elongation-at-break (greater than 300%) after QUV aging for 1,000 hours. IE8 showed improved (increased) elongation-at-break (greater than 500%) after heat aging (thermal aging) at 150° C. for 168 hours and improved (increased) elongation-at-break (greater than 400%) after QUV aging for 1,000 hours.

Without wishing to be bound by theory it is believed that IE5 shows the lowest useful loading of constituent (D) SCHBP of formula (I), that IE7 shows the lowest useful loading of constituent (C) triazinyl-functional hindered piperidine, and that IE6 shows the highest useful loading of constituent (D) SCHBP of formula (I). Loading of constituent (D) SCHBP of formula (I) higher than that used in IE6 undesirably may result in an MDR MH (182° C.) cure value below 0.1 N-m. Loadings of (B) carbon black in IE1 to IE8 are neither at the lowest or highest useful loadings, as loadings of (B) carbon black less than 1.0 wt% or greater than 3.0 wt% may be useful.

As shown by the data in Tables 1 to 3, the three-constituent combination of the (B) carbon black, (C) triazinyl-functional hindered piperidine, and (D) sulfur-containing hindered bisphenol in the inventive formulations IE1 to IE8 performed better than the comparative formulations of CE1 to CE7 that contain only two of the three constituents. The inventive formulations IE1 to IE8 had improved performance tensile strength and elongation-at-break performance after QUV aging relative to comparable comparative formulations CE1 to CE7, while the dielectric constant and dissipation factor properties of inventive formulations IE1 to IE8 are satisfactory for use of the formulations in insulation layers of power cables. For example, the inventive formulations IE1 to IE8 are less brittle after QUV aging than are the comparable comparative formulations CE1 to CE7. At a given level of tensile strength or elongation-at-break performance, the inventive formulation enables lower loadings of the (B) carbon black relative to loadings of carbon black in the comparative formulations, thereby enabling the inventive formulation to be more easily melt-processed such as melt-compounded and melt-extruded, including during extrusion of insulation layer thereof onto a cable.

## Claims

1. A curable polyolefin-additive formulation comprising constituents (A) to (D): from 70 to 99.7 weight percent (wt%) of (A) a polyolefin polymer having a melt index ("I₂") of from 0.1 to 50 grams per 10 minutes (g/10 min.), measured by ASTM D1238-04 at 190° C. and load of 2.16 kilograms according to the Melt Index Test Method; from 0.1 to 5 wt% of (B) a carbon black; from 0.2 to 5 wt% of (C) a triazinyl-functional hindered piperidine; and from 0.1 to 1.00 wt% of (D) a sulfur-containing hindered bisphenol (SCHBP) of formula (I): HO(R¹)ₓPh-S-Ph(R²)_{y}OH (I), wherein subscript x is an integer from 1 to 3; HO(R¹)ₓPh is a first monovalent hindered phenol group wherein each R¹ is independently a (C₁-C₇)alkyl and at least one R¹ is independently a (C₃-C₆)alkyl and is ortho to the hydroxyl (HO-) of the first monovalent hindered phenol group; subscript y is an integer from 1 to 3; Ph(R²)_{y}OH is a second monovalent hindered phenol group wherein each R² is independently a (C₁-C₇)alkyl and at least one R² is independently a (C₃-C₆)alkyl and is ortho to the hydroxyl (-OH) of the second monovalent hindered phenol group; and wherein the (B) carbon black is **characterized by** (i) a particle size from 15 to 30 nanometers (nm) measured according to ASTM D3849-14a; and (ii) an oil absorption number (OAN) from 50 to 250 milliliters per 100 grams (ml/100 g) measured according to ASTM D2414-17, Procedure A with dibutyl phthalate (DBP).

2. The curable polyolefin-additive formulation of claim 1 wherein the (A) polyolefin polymer is **characterized by** any one of limitations (i) to (xv): (i) an ethylene-based polymer; (ii) an ethylene-based polymer that is a low density polyethylene (LDPE); (iii) an ethylene-based polymer that is a linear low density polyethylene (LLDPE); (iv) an ethylene-based polymer that is a medium density polyethylene (MDPE); (v) an ethylene-based polymer that is a high density polyethylene (HDPE); (vi) an ethylene-based polymer that is a poly(ethylene-co-alpha-olefin) copolymer; (vii) is a polypropylene; (viii) an ethylene-based polymer that is an ethylene/propylene copolymer; (ix) a density of at least 0.925 g/cm³ and is a polyethylene and has a melt flow index (I₂) of 0.1 to 20 g/10 min. at 190° C./2.16 kg load; (x) a density of 0.89 to 0.96 g/cm³ and is a polypropylene and has a melt flow rate (MFR) of 0.5 to 50 g/10 min. at 230° C./2.16 kg load; (xi) a molecular weight distribution (MWD) that is monomodal; (xii) a MWD that is bimodal; (xiii) a combination of (ii) and (ix); (xiv) a combination of (ii), (ix) and (xi); and (xv) a combination of (ii), (ix) and (xii).

3. The curable polyolefin-additive formulation of any one of claims 1 or 2 wherein the (C) triazinyl-functional hindered piperidine is selected from (i) a mixture of 1,3,5-Triazine-2,4,6-triamine, N,N'-[1,2-ethanediylbis[[[4,6-bis[butyl(1,2,2,6,6-pentamethyl-4-piperidinyl)amino]-1,3,5-triazin-2-yl]imino]-3,1propanediyl]]-bis[N,N'-dibutyl-N,N'-bis (1,2,2,6,6-pentamethyl-4-piperidinyl)-, and dimethyl succinate polymer with 4-hydroxy-2,2,6,6,-tetramethyl-1-piperidineethanol; (ii) (poly[[6-(1,1,3,3-tetramethylbutyl) amino]-1,3,5-triazine-2,4-diyl][[2,2,6,6-tetramethyl-4-piperidyl)imino]]hexamethylene (2,2,6,6-tetramethyl-4-piperidyl)imino]]); (iii) (1,3,5-Triazine-2,4,6-triamine-N,N'-[1,2-ethanediylbis[[[4. 6-bis[butyl(1,2,2,6,6-pentamethyl-4-peperidinyl)amino]-1,3,5-triazin-2-yl] imino]-3,1-propanediyl]]-bis[N,N'-dibutyl-N,N'-bis (1,2,2,6,6-pentamethyl-4-piperidinyl); and (iv) a reaction product of 1,6-hexanediamine, N,N'-bis(2,2,6,6-tetramethyl-4-piperidinyl)-polymer with 2,4,6-trichloro-1,3,5-triazine with N-butyl-1-butanamine and N-butyl-2,2,6,6-tetramethyl-4-piperidinamine.

4. The curable polyolefin-additive formulation of any one of claims 1 to 3 wherein the (D) SCHBP is **characterized by** any one of limitations (i) to (ix): (i) subscript x is 2 or 3; (ii) at least one R¹ is a 1,1-dimethylethyl and is ortho to the hydroxyl of the first monovalent hindered phenol group; (iii) subscript y is 2 or 3; (iv) at least one R² is a 1,1-dimethylethyl and is ortho to the hydroxyl of the second monovalent hindered phenol group; (v) at least one R¹ is a 1,1-dimethylethyl and is ortho to the hydroxyl of the first monovalent hindered phenol group and at least one R¹ is a methyl; (vi) at least one R² is a 1,1-dimethylethyl and is ortho to the hydroxyl of the second monovalent hindered phenol group and at least one R² is a methyl; (vii) subscript x is 2, one R¹ is a 1,1-dimethylethyl and is ortho to the hydroxyl of the first monovalent hindered phenol group and one R¹ is a methyl; (viii) subscript y is 2, one R² is a 1,1-dimethylethyl and is ortho to the hydroxyl of the second monovalent hindered phenol group and one R² is a methyl; and (ix) the SCHBP is 4,4'-thiobis(2-(1,1-dimethylethyl)-5-methylphenol).

5. The curable polyolefin-additive formulation of any one of claims 1 to 4 further comprising at least one additive selected from 0.1 to 5 wt% of (E) an organic peroxide; (F) an antioxidant having a structure different than formula (I); (G) a processing aid; (H) a colorant; (I) a metal deactivator; (J) an olefin-functional hydrolyzable silane; (K) a corrosion inhibitor; (L) a flame retardant; and (M) a filler.

6. The curable polyolefin-additive formulation of any one of claims 1 to 4 further comprising from 0.1 to 5 wt% of (E) an organic peroxide and/or (J) an olefin-functional hydrolyzable silane.

7. A method of making a curable polyolefin-additive formulation, the method comprising mixing the constituents (A) to (D) of any one of claims 1 to 4 and optionally any one or more of constituents (E) to (M) of claim 5 or 6 so as to give a mixture; and melting or extruding the mixture so as to make the curable polyolefin-additive formulation.

8. A crosslinked polyolefin-additive product comprising a reaction product of curing the curable polyethylene-additive formulation of any one of claims 1 to 6.

9. A manufactured article comprising a shaped form of the crosslinked polyolefin-additive product of claim 8.

10. A coated conductor comprising a conductive core and a polymeric layer at least partially surrounding the conductive core, wherein at least a portion of the polymeric layer comprises the curable polyethylene-additive formulation of any one of claims 1 to 6 or the crosslinked polyolefin-additive product of claim 8.

## Patentansprüche

1. Härtbare Polyolefinadditivformulierung, umfassend Bestandteile (A) bis (D): von 70 bis 99,7 Gewichtsprozent (Gew.-%) von (A) einem Polyolefinpolymer mit einem Schmelzindex ("I₂") von 0,1 bis 50 Gramm pro 10 Minuten (g/10 min.), gemessen nach ASTM D1238-04 bei 190 °C und einer Last von 2,16 Kilogramm nach dem Schmelzindex-Testverfahren; von 0,1 bis 5 Gew.-% (B) Ruß; von 0,2 bis 5 Gew.-% (C) einem triazinylfunktionellen gehinderten Piperidin; und von 0,1 bis 1,00 Gew.-% (D) einem schwefelhaltigen gehinderten Bisphenol (SCHBP) der Formel (I): HO(R¹)ₓPh-S-Ph(R²)_{y}OH (I), wobei Index x eine ganze Zahl von 1 bis 3 ist; HO(R¹)ₓPh eine erste einwertige gehinderte Phenolgruppe ist, wobei jedes R¹ unabhängig voneinander ein (C₁-C₇)-Alkyl ist und mindestens ein R¹ unabhängig voneinander ein (C₃-C₆)-Alkyl ist und in ortho-Position zu dem Hydroxyl (HO-) der ersten einwertigen gehinderten Phenolgruppe steht; Index y eine ganze Zahl von 1 bis 3 ist; Ph(R²)_{y}OH eine zweite einwertige gehinderte Phenolgruppe ist, wobei jedes R² unabhängig voneinander ein (C₁-C₇)-Alkyl ist und mindestens ein R² unabhängig voneinander ein (C₃-C₆)-Alkyl ist und in ortho-Position zu dem Hydroxyl (-OH) der zweiten einwertigen gehinderten Phenolgruppe steht; und wobei der (B) Ruß **gekennzeichnet ist durch** (i) eine Partikelgröße von 15 bis 30 Nanometer (nm), gemessen nach ASTM D3849-14a; und (ii) eine Ölabsorptionszahl (OAN) von 50 bis 250 Milliliter pro 100 Gramm (ml/100 g), gemessen nach ASTM D2414-17, Verfahren A mit Dibutylphthalat (DBP).

2. Härtbare Polyolefinadditivformulierung nach Anspruch 1, wobei das (A) Polyolefinpolymer **gekennzeichnet ist durch** eine der Begrenzungen (i) bis (xv) definiert ist: (i) ein ethylenbasiertes Polymer; (ii) ein Polymer auf Ethylenbasis, das ein Polyethylen niedriger Dichte (LDPE) ist; (iii) ein Polymer auf Ethylenbasis, das ein lineares Polyethylen niedriger Dichte (LLDPE) ist; (iv) ein Polymer auf Ethylenbasis, das ein Polyethylen mittlerer Dichte (MDPE) ist; (v) ein Polymer auf Ethylenbasis, das ein Polyethylen hoher Dichte (HDPE) ist; (vi) ein Polymer auf Ethylenbasis, das ein Poly(ethylen-co-alpha-olefin)-Copolymer ist; (vii) ein Polypropylen ist; (viii) ein Polymer auf Ethylenbasis, das ein Ethylen/Propylen-Copolymer ist; (ix) eine Dichte von mindestens 0,925 g/cm³ und ein Polyethylen ist und einen Schmelzindex (I₂) von 0,1 bis 20 g/10 min. bei 190 °C./2,16 kg Last aufweist; (x) eine Dichte von 0,89 bis 0,96 g/cm³ und ein Polypropylen ist und eine Schmelzfließrate (MFR) von 0,5 bis 50 g/10 min bei 230 °C/2,16 kg Last aufweist; (xi) eine Molekulargewichtsverteilung (MWD), die monomodal ist; (xii) eine MWD, die bimodal ist; (xiii) eine Kombination von (ii) und (ix); (xiv) eine Kombination von (ii), (ix) und (xi); und (xv) eine Kombination von (ii), (ix) und (xii) ist.

3. Härtbare Polyolefinadditivformulierung nach einem der Ansprüche 1 oder 2, wobei das (C) triazinylfunktionelle gehinderte Piperidin ausgewählt ist aus (i) einer Mischung aus 1,3,5-Triazin-2,4,6-triamin, N,N'-[1,2-ethandiylbis[[[4,6-bis[butyl(1,2,2,6,6-pentamethyl-4-piperidinyl)amino]-1,3,5-triazin-2-yl]imino]-3,1-propandiyl]]-bis[N,N'-dibutyl-N,N'-bis(1,2,2,6,6-pentamethyl-4-piperidinyl)-, und Dimethylsuccinat-Polymer mit 4-Hydroxy-2,2,6,6,-tetramethyl-1-piperidinethanol; (ii) (Poly[[6-(1,1,3,3-tetramethylbutyl)amino]-1,3,5-triazin-2,4-diyl][[2,2,6,6-tetramethyl-4-piperidyl)imino]]hexamethylen (2,2,6,6-tetramethyl-4-piperidyl)imino]]); (iii) (1,3,5-Triazin-2,4,6-triamin-N,N'-[1,2-ethandiylbis[[[4. 6-bis[butyl(1,2,2,6,6-pentamethyl-4-piperidinyl)amino]-1,3,5-triazin-2-yl]imino]-3,1-propandiyl]]-bis[N,N'-dibutyl-N,N'-bis(1,2,2,6,6-pentamethyl-4-piperidinyl); und (iv) ein Reaktionsprodukt von 1,6-Hexandiamin, N,N'-bis(2,2,6,6-tetramethyl-4-piperidinyl)-polymer mit 2,4,6-Trichlor-1,3,5-triazin mit N-Butyl-1-butanamin und N-Butyl-2,2,6,6-tetramethyl-4-piperidinamin.

4. Härtbare Polyolefinadditivformulierung nach einem der Ansprüche 1 bis 3, wobei das (D) SCHBP **gekennzeichnet ist durch** eine der Begrenzungen (i) bis (ix): (i) Index x ist 2 oder 3; (ii) mindestens ein R¹ ist ein 1,1-Dimethylethyl und steht in ortho-Position zu dem Hydroxyl der ersten einwertigen gehinderten Phenolgruppe; (iii) Index y ist 2 oder 3; (iv) mindestens ein R² ist ein 1,1-Dimethylethyl und steht in ortho-Position zu dem Hydroxyl der zweiten einwertigen gehinderten Phenolgruppe; (v) mindestens ein R¹ ist ein 1,1-Dimethylethyl und steht in ortho-Position zu dem Hydroxyl der ersten einwertigen gehinderten Phenolgruppe und mindestens ein R¹ ist ein Methyl; (vi) mindestens ein R² ist ein 1,1-Dimethylethyl und steht in ortho-Position zu dem Hydroxyl der zweiten einwertigen gehinderten Phenolgruppe und mindestens ein R² ist ein Methyl; (vii) Index x ist 2, ein R¹ ist ein 1,1-Dimethylethyl und steht in ortho-Position zu dem Hydroxyl der ersten einwertigen gehinderten Phenolgruppe und ein R¹ ist ein Methyl; (viii) Index y ist 2, ein R² ist ein 1,1-Dimethylethyl und ist in ortho-Position zu dem Hydroxyl der zweiten einwertigen gehinderten Phenolgruppe und ein R² ist ein Methyl; und (ix) das SCHBP ist 4,4'-Thiobis(2-(1,1-dimethylethyl)-5-methylphenol).

5. Härtbare Polyolefinadditivformulierung nach einem der Ansprüche 1 bis 4, ferner umfassend mindestens ein Additiv ausgewählt aus 0,1 bis 5 Gew.-% von (E) einem organischen Peroxid; (F) einem Antioxidans mit einer Struktur, die sich von Formel (I) unterscheidet; (G) einer Verarbeitungshilfe; (H) einem Farbmittel; (I) einem Metalldeaktivator; (J) einem olefinfunktionellen hydrolysierbaren Silan; (K) einem Korrosionsinhibitor; (L) einem Flammenhemmungsmittel; und (M) einem Füllstoff.

6. Härtbare Polyolefinadditivformulierung nach einem der Ansprüche 1 bis 4, ferner umfassend von 0,1 bis 5 Gew.-% von (E) einem organischen Peroxid und/oder (J) einem olefinfunktionellen hydrolysierbaren Silan.

7. Verfahren zur Herstellung einer härtbaren Polyolefinadditivformulierung, wobei das Verfahren das Mischen der Bestandteile (A) bis (D) nach einem der Ansprüche 1 bis 4 und gegebenenfalls eines oder mehrerer der Bestandteile (E) bis (M) von Anspruch 5 oder 6 umfasst, um eine Mischung zu ergeben; und Schmelzen oder Extrudieren der Mischung, um die härtbare Polyolefinadditivformulierung herzustellen.

8. Vernetztes Polyolefinadditivprodukt, das ein Reaktionsprodukt der Härtung der härtbaren Polyolefinadditivformulierung nach einem der Ansprüche 1 bis 6 umfasst.

9. Gefertigtes Erzeugnis, umfassend eine geformte Form des vernetzten Polyolefinadditivprodukts nach Anspruch 8.

10. Beschichteter Leiter, umfassend einen leitfähigen Kern und eine Polymerschicht, die den leitfähigen Kern mindestens teilweise abdeckt, wobei mindestens ein Abschnitt der Polymerschicht die härtbare Polyolefinadditivformulierung nach einem der Ansprüche 1 bis 6 oder das vernetzte Polyolefinadditivprodukt nach Anspruch 8 umfasst.

## Revendications

1. Formulation d'additif polyoléfinique durcissable comprenant les constituants (A) à (D) : de 70 à 99,7 pour cent en poids (% en poids) de (A) un polymère polyoléfinique ayant un indice de fusion (« I₂ ») allant de 0,1 à 50 grammes par 10 minutes (g/10 min), mesuré selon la norme ASTM D1238-04 à 190 °C et une charge de 2,16 kilogrammes selon le Procédé d'essai de l'indice de fusion ; de 0,1 à 5,0 % en poids de (B) un noir de carbone ; de 0,2 à 5 % en poids de (C) une pipéridine encombrée à fonction triazinyle ; et de 0,1 à 1,00 % en poids de (D) un bisphénol encombré contenant du soufre (SCHBP) de formule (I) : HO(R¹)ₓPh-S-Ph(R²)_{y}OH (I), dans laquelle l'indice x est un entier allant de 1 à 3 ; HO(R¹)ₓPh est un premier groupe phénol encombré monovalent, dans laquelle chaque R¹ est indépendamment un alkyle en (C₁ à C₇) et au moins un R¹ est indépendamment un alkyle en (C₃ à C₆) et est ortho par rapport à l'hydroxyle (HO-) du premier groupe phénol encombré monovalent ; l'indice y est un nombre entier allant de 1 à 3 ; Ph(R²)_{y}OH est un second groupe phénol encombré monovalent, dans laquelle chaque R² est indépendamment un alkyle en (C₁ à C₇) et au moins un R² est indépendamment un alkyle en (C₃ à C₆) et est ortho par rapport à l'hydroxyle (-OH) du second groupe phénol encombré monovalent ; et dans laquelle le (B) noir de carbone est **caractérisé par** (i) une taille de particule allant de 15 à 30 nanomètres (nm) mesurée selon la norme ASTM D3849-14a ; et (ii) un indice d'absorption d'huile (OAN) de 50 à 250 millilitres par 100 grammes (ml/100 g) mesuré selon la norme ASTM D2414-17, procédure A avec le phtalate de dibutyle (DBP).

2. Formulation d'additif polyoléfinique durcissable selon la revendication 1, dans laquelle le polymère polyoléfinique (A) est **caractérisé par** l'une quelconque des limitations (i) à (xv) : (i) un polymère à base d'éthylène ; (ii) un polymère à base d'éthylène qui est un polyéthylène basse densité (PEBD) ; (iii) un polymère à base d'éthylène qui est un polyéthylène linéaire basse densité (PELBD) ; (iv) un polymère à base d'éthylène qui est un polyéthylène moyenne densité (PEMD) ; (v) un polymère à base d'éthylène qui est un polyéthylène haute densité (PEHD) ; (vi) un polymère à base d'éthylène qui est un copolymère de poly(éthylène-co-alpha-oléfine) ; (vii) est un polypropylène ; (viii) un polymère à base d'éthylène qui est un copolymère d'éthylène/propylène ; (ix) une masse volumique d'au moins 0,925 g/cm³ et est un polyéthylène et a un indice de fluidité à chaud (I₂) de 0,1 à 20 g/10 min à 190 °C/charge de 2,16 kg ; (x) une masse volumique de 0,89 à 0,96 g/cm³ et est un polypropylène et a un indice de fluidité à chaud (IFC) de 0,5 à 50 g/10 min à 230 °C/charge de 2,16 kg ; (xi) une distribution des masses moléculaires (DMM) qui est monomodale ; (xii) une DMM qui est bimodale ; (xiii) une combinaison de (ii) et (ix) ; (xiv) une combinaison de (ii), (ix) et (xi) ; et (xv) une combinaison de (ii), (ix) et (xii).

3. Formulation d'additif polyoléfinique durcissable selon l'une quelconque des revendications 1 ou 2, dans laquelle la (C) pipéridine encombrée à fonction triazinyle est choisie parmi (i) un mélange de 1,3,5-triazine-2,4,6-triamine, N,N'-[1,2-éthanediylbis[[[4,6-bis[butyl(1,2,2,6,6-pentaméthyl-4-pipéridinyl)amino]-1,3,5-triazine-2-yl]imino]-3,1 propanediyl]]-bis[N,N'-dibutyl-N,N'-bis (1,2,2,6,6-pentaméthyl-4-pipéridinyl)-, et polymère de succinate de diméthyle avec 4-hydroxy-2,2,6,6,-tétraméthyl-1-pipéridineéthanol ; (ii) (poly[[6-(1,1,3,3-tétraméthylbutyl)amino]-1,3,5-triazine-2,4-diyl][[2,2,6,6-tétraméthyl-4-pipéridyl)imino]]hexaméthylène (2,2,6,6-tétraméthyl-4-pipéridyl)imino]]) ; (iii) (1,3,5-triazine-2,4,6-triamine-N,N'-[1,2-éthanediylbis[[[4. 6-bis[butyle (1,2,2,6,6-pentaméthyl-4-pepéridinyl)amino]-1,3,5-triazin-2-yle] imino]-3,1-propanediyl]]-bis[N,N'-dibutyl-N,N'-bis (1,2,2,6,6-pentaméthyl-4-pipéridinyle) ; et (iv) un produit de réaction de 1,6-hexanediamine, N,N'-bis(2,2,6,6-tétraméthyl-4-pipéridinyl)-polymère avec 2,4,6-trichloro-1,3,5-triazine avec N-butyl-1-butanamine et N-butyl-2,2,6,6-tétraméthyl-4-pipéridinamine.

4. Formulation d'additif polyoléfinique durcissable selon l'une quelconque des revendications 1 à 3, dans laquelle le (D) SCHBP est **caractérisé par** l'une quelconque des limitations (i) à (ix) : (i) l'indice x vaut 2 ou 3 ; (ii) au moins un R¹ est un 1,1-diméthyléthyle et est ortho par rapport à l'hydroxyle du premier groupe phénol encombré monovalent ; (iii) l'indice y vaut 2 ou 3 ; (iv) au moins un R² est un 1,1-diméthyléthyle et est ortho par rapport à l'hydroxyle du second groupe phénol encombré monovalent ; (v) au moins un R¹ est un 1,1-diméthyléthyle et est ortho par rapport à l'hydroxyle du premier groupe phénol encombré monovalent et au moins un R¹ est un méthyle ; (vi) au moins un R² est un 1,1-diméthyléthyle et est ortho par rapport à l'hydroxyle du second groupe phénol encombré monovalent et au moins un R² est un méthyle ; (vii) l'indice x vaut 2, un R¹ est un 1,1-diméthyléthyle et est ortho par rapport à l'hydroxyle du premier groupe phénol encombré monovalent et un R¹ est un méthyle ; (viii) l'indice y vaut 2, un R² est un 1,1-diméthyléthyle et est ortho par rapport à l'hydroxyle du second groupe phénol encombré monovalent et un R² est un méthyle ; et (ix) le SCHBP est 4,4'-thiobis(2-(1,1-diméthyléthyl)-5-méthylphénol).

5. Formulation d'additif polyoléfinique durcissable selon l'une quelconque des revendications 1 à 4, comprenant en outre au moins un additif choisi parmi 0,1 à 5 % en poids (E) d'un peroxyde organique ; (F) un antioxydant ayant une structure différente de la formule (I) ; (G) un auxiliaire de traitement ; (H) un colorant ; (I) un désactivateur de métaux ; (J) un silane hydrolysable à fonction oléfinique ; (K) un inhibiteur de corrosion ; (L) un ignifugeant ; et (M) une charge.

6. Formulation d'additif polyoléfinique durcissable selon l'une quelconque des revendications 1 à 4, comprenant en outre de 0,1 à 5 % en poids (E) d'un peroxyde organique et/ou (J) un silane hydrolysable à fonction oléfinique.

7. Procédé de fabrication d'une formulation d'additif polyoléfinique durcissable, le procédé comprenant le mélange des constituants (A) à (D) selon l'une quelconque des revendications 1 à 4 et facultativement l'un quelconque ou plusieurs des constituants (E) à (M) selon la revendication 5 ou 6, de manière à obtenir un mélange ; et la fusion ou l'extrusion du mélange de façon à fabriquer la formulation d'additif polyoléfinique durcissable.

8. Produit additif polyoléfinique réticulé comprenant un produit de réaction obtenu par durcissement de la formulation d'additif polyéthylène durcissable selon l'une quelconque des revendications 1 à 6.

9. Article manufacturé comprenant une forme profilée du produit additif polyoléfinique réticulé selon la revendication 8.

10. Conducteur revêtu comprenant une âme conductrice et une couche polymère entourant au moins partiellement l'âme conductrice, dans lequel au moins une partie de la couche polymère comprend la formulation d'additif polyéthylène durcissable selon l'une quelconque des revendications 1 à 6 ou le produit additif polyoléfinique réticulé selon la revendication 8.
